# EUROPÄISCHE PATENTANMELDUNG

(11) **EP 3 875 406 A1**
(43) Veröffentlichungstag der Anmeldung: **08.09.2021**
(21) Anmeldenummer: 21160884.9
(22) Anmeldetag: 05.03.2021
(51) Int. Cl.: B65G 47/14, B21D 43/00, B23Q 7/00

(54) **VERFAHREN UND VORRICHTUNG ZUR ENTNAHME EINES ROHRES**

(30) Priorität: 05.03.2020 DE 102020001429
(71) Anmelder: STOPA Anlagenbau GmbH, 77855 Achern-Gamshurst (DE)
(72) Erfinder: Nicolai, Felix, 77652 Offenburg (DE)
(74) Vertreter: Lichti - Patentanwälte Partnerschaft mbB

(57) **Zusammenfassung**

Die Erfindung umfasst ein Verfahren zur Entnahme eines einzelnen Rohres aus einer Gruppe von mehreren Rohren mit den folgenden Verfahrensschritten: Ergreifen eines endständigen Abschnitts des Rohres mittels des Hebeteils, Anheben des endständigen Abschnitts des Rohres durch Anheben des Hebeteils, Anordnen des endständigen Abschnitts des Rohres auf einem Halteteil und Bewegen des Halteteils mit einer Bewegungsrichtungskomponente parallel zur Erstreckungsrichtung des Rohres, bis das Rohr der Gruppe von Rohren entnommen ist. Ferner umfasst die Erfindung eine Vorrichtung zur Entnahme eines einzelnen Rohres aus einer Gruppe von Rohren, umfassend mindestens ein bewegliches Hebeteil, das zum Ergreifen eines endständigen Abschnitts des Rohres und zum Anheben des endständigen Abschnitts des Rohres ausgebildet ist, und mindestens ein bewegliches Halteteil, das zum Anordnen unterhalb des endständigen Abschnitts des Rohres und zur Bewegung mit einer Bewegungsrichtungskomponente parallel zur Erstreckungsrichtung des Rohres ausgestaltet ist.

## Beschreibung

Die Erfindung betrifft ein Verfahren zur Entnahme eines einzelnen Rohres aus einer Gruppe von mehreren Rohren. Ferner betrifft die Erfindung eine Vorrichtung zur Entnahme eines einzelnen Rohres aus einer Gruppe von mehreren Rohren und ein Computerprogramm mit Programmcodemitteln, das dazu ausgestaltet ist, die Schritte des genannten Verfahrens durchzuführen, wenn das Computerprogramm ausgeführt wird.

Im Bereich der Intralogistik müssen häufig einzelne Rohre als Halbzeuge Werkzeugmaschinen zugeführt werden. In der Regel liegen aber die Rohre in einer Gruppe von mehreren Rohren in zufälliger Anordnung vor oder werden dergestalt angeliefert, so dass die Rohre, um sie der Werkzeugmaschine zuzuführen, erst der Gruppe einzeln entnommen werden müssen. Dies wird auch als Vereinzelung bezeichnet. Im Sinne der Erfindung bezeichnet Rohr ein rohrförmiges Langgut mit beliebiger Profilgeometrie, das mindestens abschnittsweise einen inneren Hohlraum und beispielsweise ein Verhältnis zwischen Rohrdurchmesser und Rohrlänge von mindestens 1:5, insbesondere 1:10, aufweist.

Aus dem Stand der Technik ist ein Verfahren bekannt, bei dem das zu entnehmende Rohr mittels einer Vielzahl von Saugstücken entnommen wird: Die in der Regel linear angeordneten Saugstücke werden zunächst an dem zu entnehmenden Rohr platziert. Über eine Pumpe wird anschließend Unterdruck erzeugt, so dass die mit der Pumpe verbundenen Saugstücke kraftschlüssig mit dem Rohr verbunden werden. Anschließend werden die Saugstücke, zusammen mit dem gesamten Rohr, angehoben, so dass das Rohr der Gruppe einzeln entnommen wird.

Das bekannte Verfahren weist erhebliche Nachteile auf. Bei kleinen Rohrdurchmessern kann durch den Unterdruck nicht ausreichend Kraft für die kraftschlüssige Verbindung erzeugt werden. Es müssen dann viele kleinere Saugstücke verwendet werden, wodurch das Verfahren sehr aufwändig und teuer wird. Bei großen Rohrgewichten kann auch durch eine Vielzahl an Saugstücken nicht ausreichend Kraft erzeugt werden, um das Rohr einzeln der Gruppe zu entnehmen. Häufig liegen die Rohre auch in gekrümmter Anordnung vor, so dass die linear angeordneten Saugstücke nicht sämtlich am Rohr angeordnet werden können. Eine Ausrichtung der Saugstücke für beliebige Krümmungen wäre aufwändig, teuer und daher nicht praktikabel. Insbesondere Rohre mit kleinen Rohrdurchmessern sind häufig gekrümmt, so dass das bekannte Verfahren nicht anwendbar ist und die Rohre manuell entnommen werden müssen. Schließlich ist aufgrund der kraftschlüssigen Verbindung der Saugstücke mit dem Rohr die Gefahr von ernstzunehmenden Personen- und Materialschäden gegeben, wenn bei einem Stromausfall die Saugwirkung der Saugstücke schlagartig ausfällt und das Rohr im angehobenen Zustand unkontrolliert herunterfällt.

Es ist daher die Aufgabe der Erfindung, ein Verfahren und eine Vorrichtung zu entwickeln, die die genannten Nachteile aus dem Stand der Technik beseitigen, und die insbesondere eine breitere und zuverlässigere Anwendung für verschiedene Rohrgeometrien, -anordnungen und -materialien ermöglichen.

Die Aufgabe der Erfindung wird gelöst durch ein Verfahren zur Entnahme eines einzelnen Rohres aus einer Gruppe von mehreren Rohren mit den folgenden Verfahrensschritten: Ergreifen eines endständigen Abschnitts des Rohres mittels eines Hebeteils, Anheben des endständigen Abschnitts des Rohres durch Anheben des Hebeteils, Anordnen des endständigen Abschnitts des Rohres auf mindestens einem Halteteil und Bewegen des mindestens einen Halteteils mit einer Bewegungsrichtungskomponente parallel zur Erstreckungsrichtung des Rohres, bis das Rohr der Gruppe von Rohren entnommen ist.

Ferner wird die Aufgabe der Erfindung gelöst durch eine Vorrichtung zur Entnahme eines einzelnen Rohres aus einer Gruppe von mehreren Rohren, umfassend: Mindestens ein bewegliches Hebeteil, das zum Ergreifen eines endständigen Abschnitts des Rohres und zum Anheben des endständigen Abschnitts des Rohres ausgebildet ist, und mindestens ein bewegliches Halteteil, das zum Anordnen unterhalb des endständigen Abschnitts des Rohres und zur Bewegung mit einer Bewegungsrichtungskomponente parallel zur Erstreckungsrichtung des Rohres ausgestaltet ist.

Schließlich wird die Aufgabe gelöst durch ein Computerprogramm mit Programmcodemitteln, das dazu ausgestaltet ist, die Schritte eines erfindungsgemäßen Verfahrens durchzuführen, wenn das Computerprogramm auf einem Computer oder einer entsprechenden Recheneinheit ausgeführt wird, insbesondere auf einer Steuereinheit einer erfindungsgemäßen Vorrichtung.

Die Erfindung basiert auf dem Grundgedanken, dass die Entnahme des Rohres durch das Ergreifen und Anheben des endständigen Abschnitts des Rohres die Zuverlässigkeit des Verfahrens verbessert und auch die Anwendung des Verfahrens bei gekrümmten Rohren ermöglicht. Da mit dem erfindungsgemäßen Verfahren das Rohr sukzessive angehoben und der Gruppe von Rohren entnommen wird, ist eine Anwendung des Verfahrens auch bei zufälliger Anordnung der Rohre in der Gruppe möglich. Die Erfindung ermöglicht daneben die Entnahme von Rohren weitgehend unabhängig von den Profilgeometrien, Anordnungen, Querschnitten, Werkstoffen und/oder Oberflächenbeschaffenheiten der Rohre. Im Sinne der Erfindung erstreckt sich der endständige Abschnitt des Rohres von dessen Stirnseite in Richtung der gegenüberliegenden Stirnseite bis höchstens 20%, insbesondere bis höchstens 10%, und weiter insbesondere bis höchstens 5% der Rohrlänge.

Vorzugsweise wird das Hebeteil mit einer Stirnseite des Rohres in Eingriff gebracht. Beispielsweise wird das Hebeteil in einem Hohlraum des Rohres bewegt. Auf diese Weise ist es einfach möglich, zunächst nur den endständigen Abschnitt des Rohres anzuheben, so dass das Rohr leichter der Gruppe von Rohren entnommen werden kann.

Das Anordnen des endständigen Abschnitts des Rohres auf dem mindestens einen Halteteil erfolgt beispielsweise dadurch, dass der endständige Abschnitt des Rohres auf das Halteteil aufgelegt wird, was durch eine Bewegung des endständigen Abschnitts des Rohres und/oder eine Bewegung des Halteteils erfolgen kann. In einer Weiterbildung der Erfindung wird der endständige Abschnitt des Rohres auf mindestens zwei Halteteilen aufgelegt, um das Rohr bei der Entnahme zu stabilisieren. Die Halteteile können unabhängig voneinander insbesondere linear bewegt werden, um die Entnahme des Rohres gezielt zu steuern.

Insbesondere ergreift das Hebeteil den endständigen Abschnitt des Rohres bei der Bewegung des mindestens einen Halteteils. Dadurch kann das Hebeteil als Anschlag für das insbesondere auf dem mindestens einen Halteteil angeordnete Rohr dienen, so dass ein Herunterfallen des Rohres bei dessen Entnahme vermieden wird. Alternativ kann das Hebeteil bei oder vor dem Anordnen des endständigen Abschnitts des Rohres auf dem mindestens einen Halteteil vom Rohr entfernt werden, um eine größere Bewegungsfreiheit zu erhalten.

Mittels einer optischen Einrichtung kann ermittelt werden, welches Rohr der Gruppe entnommen wird, insbesondere vor der Bewegung des Hebeteils. Die optische Einrichtung kann dazu ausgebildet sein, die Lage und/oder die Position von mindestens einem Rohr der Gruppe zu erfassen.

Das entnommene Rohr kann durch eine Bewegung des mindestens einen Halteteils einer Zielposition, insbesondere einer Werkzeugmaschine, zugeführt werden, woraufhin das nächste Rohr der Gruppe entnommen wird. Auf diese Weise kann jedes Rohr der Gruppe einzeln entnommen und insbesondere der Werkzeugmaschine zugeführt werden. Insbesondere kann das Rohr durch die Bewegung mindestens zweier Halteteile der Zielposition zugeführt werden.

Das Hebeteil weist vorzugsweise einen Dorn auf, der insbesondere mit der Stirnseite des Rohres in Eingriff bringbar ist. Dadurch kann der endständige Abschnitt des Rohres zuverlässig angehoben werden.

Die erfindungsgemäße Vorrichtung kann zur Durchführung des erfindungsgemäßen Verfahrens ausgestaltet sein. Das Hebeteil kann ferner ein Klemmteil aufweisen, an welchem der endständige Abschnitt des Rohres klemmbar ist und das insbesondere mit dem Dorn verbunden ist. Das Hebeteil kann an wenigstens einer Linearführung geführt sein, um dessen Bewegung gezielt zu steuern. Vorzugsweise sind drei paarweise senkrecht zueinander angeordnete und miteinander verbundene Linearschlitten vorgesehen, um eine translatorische Bewegung des Hebeteils in sämtliche Raumrichtungen zu ermöglichen.

Eine erste optische Einrichtung ist vorzugsweise dazu ausgebildet, die Erstreckungsrichtung des zu entnehmenden Rohres in der Gruppe von Rohren zu erfassen. Beispielsweise weist die erste optische Messeinrichtung einen Linienprofilsensor auf. In einer weiteren Ausgestaltung der Erfindung ist die erste optische Einrichtung oberhalb der Rohre beweglich zu diesen angeordnet, so dass dadurch die Lage von mindestens einem Rohr bestimmbar ist.

Eine zweite optische Einrichtung kann dazu ausgebildet sein, die Position der Stirnseite des zu entnehmenden Rohres in der Gruppe von Rohren zu erfassen. Vorzugsweise weist die zweite optische Einrichtung eine Kamera auf, die zur Stirnseite des Rohres ausgerichtet ist. Besonders vorzugsweise weist die zweite optische Einrichtung eine erste Kamera und eine zweite Kamera auf, wobei die zweite Kamera näher am Hebeteil angeordnet ist als die erste Kamera. Dadurch dient die erste Kamera beispielsweise zur Ermittlung der Position des zu entnehmenden Rohres und zur groben Bestimmung für die Bewegung des Hebeteils. Die zweite Kamera dient, aufgrund ihres kleineren Abstands zum Hebeteil, zu dessen Feinjustage. In einer weiteren Ausgestaltung ist eine Kamera der zweiten optischen Einrichtung mit dem Hebeteil, insbesondere mit dem Dorn, verbunden.

Vorzugsweise sind die erste optische Einrichtung und/oder die zweite optische Einrichtung dazu ausgebildet, die Ziel-Koordinaten für die Bewegung des Hebeteils zu ermitteln, wobei die Ziel-Koordinaten beispielsweise der räumlichen Position der zum Hebeteil weisenden Stirnseite des Rohres entsprechen.

Das mindestens eine Halteteil kann mindestens einen Anschlag für das Rohr aufweisen, um ein Herunterfallen des Rohres zu verhindern. Der Anschlag kann beispielsweise durch ein vertikal ausgerichtetes Bügelteil und eine damit verbundene, relativ zur horizontalen Ebene geneigt ausgestaltete Auflagefläche gebildet sein. Alternativ kann der Anschlag durch eine im Querschnitt v-förmige Auflagefläche gebildet sein, so dass eine definierte Lageposition für das zu entnehmende Rohr geschaffen ist. Ferner ist das mindestens eine Halteteil vorzugsweise mit einem Dämpfungselement versehen, um Materialschäden beim Ablegen des Rohres auf das Halteteil zu vermeiden.

Das mindestens eine Halteteil kann an einer Schiene angeordnet und entlang der Schiene insbesondere linear beweglich sein, so dass eine definierte Bewegung des Halteteils möglich ist. Vorzugsweise sind sämtliche Halteteile an der Schiene angeordnet und entlang der Schiene beweglich. Die Schiene kann mit einem Träger verbunden und relativ zum Träger beweglich sein. Beispielweise ist die Schiene relativ zum Träger translatorisch beweglich und/oder um eine vertikale Achse schwenkbar. Dies ermöglicht eine Ausrichtung der Bewegungsrichtungen der Halteteile parallel zur Erstreckungsrichtung eines zu entnehmenden Rohres, das gegenüber den übrigen Rohren der Gruppe unter einem endlichen Winkel angeordnet ist. Die Bewegung der Schiene relativ zum Träger ist insbesondere in Abhängigkeit von Informationen von einer der optischen Einrichtungen steuerbar.

Mindestens ein Halteteil kann eine dritte optische Einrichtung aufweisen, die zur Erfassung der Lage des auf dem Halteteil angeordneten Rohres in Bezug auf das Halteteil ausgebildet ist. Vorzugsweise weist die dritte optische Einrichtung mindestens einen, insbesondere mindestens zwei Linienprofilsensoren auf. Besonders vorzugsweise erfasst die dritte optische Einrichtung die Lage des auf den Halteteil angeordneten Rohres während dessen Entnahme. Die dritte optische Einrichtung kann mit einer Steuereinheit in Verbindung stehen, die zur Bewegung der Schiene in Bezug auf den Träger ausgestaltet ist, sobald die erfasste Lage des Rohres in Bezug auf das Halteteil um einen benutzerdefinierten Toleranzwert von einer benutzerdefinierten Soll-Lage abweicht, die beispielsweise der Ausrichtung der Schiene entsprechen kann.

Dem mindestens einen Halteteil kann ein Anschlag zugeordnet sein, der als Widerlager eines von Halteteil getragenen Rohres dient, um eine sichere Bewegung des Rohres zu gewährleisten. Der Anschlag ist beispielsweise durch das Hebeteil, insbesondere durch dessen Dorn gebildet.

Vorzugsweise weist die Vorrichtung eine Steuereinheit auf, die mit dem Hebeteil, der Linearführung des Hebeteils, dem Halteteil, der mindestens einen optischen Einrichtung und/oder der Schiene verbunden ist, und die insbesondere zur Ausführung des erfindungsgemäßen Computerprogramms ausgestaltet ist.

Weitere Vorteile und Merkmale der Erfindung ergeben sich aus den Ansprüchen und aus der nachfolgenden Beschreibung, in der Ausführungsbeispiele der Erfindung im Einzelnen erläutert sind. Dabei zeigen:
- Fig. 1: eine erfindungsgemäße Vorrichtung in einer perspektivischen Ansicht;
- Fig. 2: eine Kassette mit zu entnehmenden Rohren in einer perspektivischen Ansicht;
- Fig. 3: einen vergrößerten Ausschnitt auf die Rohre mit einer ersten optischen Einrichtung;
- Fig. 4: eine perspektivische Ansicht auf ein Hebeteil;
- Fig. 5: das Hebeteil der Fig. 4 mit skizzierten Kamerawinkeln einer zweiten optischen Einrichtung;
- Fig. 6: das Hebeteil der Fig. 5 mit angehobenem Rohr;
- Fig. 7: ein angehobenes Rohr mit einem Halteteil;
- Fig. 8: ein weiter angehobenes Rohr mit dem Halteteil;
- Fig. 9: eine vergrößerte Seitenansicht auf ein Halteteil einer weiteren Ausgestaltung mit einer dritten optischen Einrichtung;
- Fig. 10: eine perspektivische Ansicht auf eine Schiene und einen Träger und
- Fig. 11: die Schiene und die Träger der Fig. 10 mit Halteteilen und einem angehobenem Rohr.

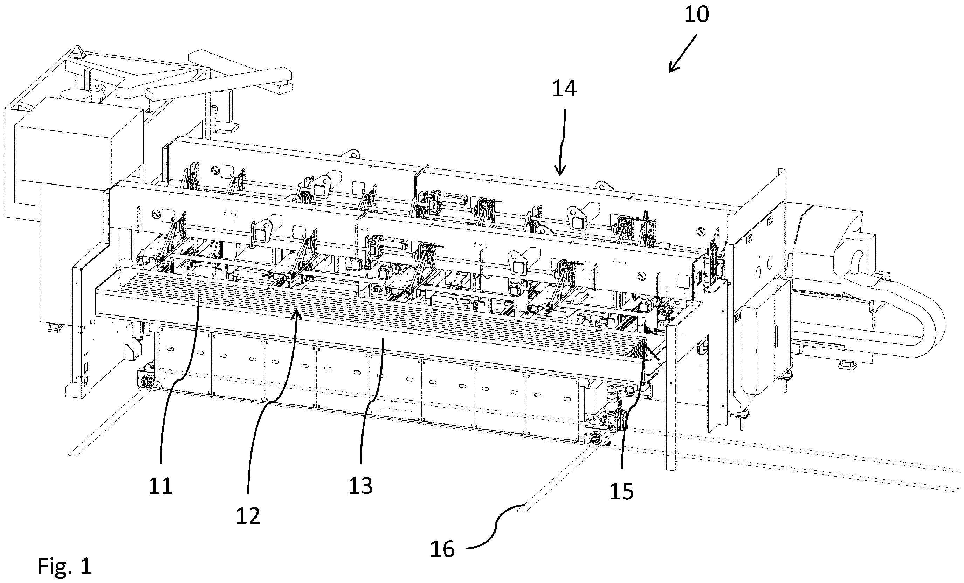

Fig. 1 zeigt in einer perspektivischen Ansicht eine erfindungsgemäße Vorrichtung 10 zur Entnahme eines einzelnen Rohres 11 aus einer Gruppe 12 von mehreren Rohren, die sich in zufälliger Anordnung in einer Kassette 13 befinden. Die Rohre 11 werden nach deren Entnahme aus der Kassette 13 einer im Hintergrund der Fig. 1 angeordneten Werkzeugmaschine 14 zur weiteren Bearbeitung zugeführt.

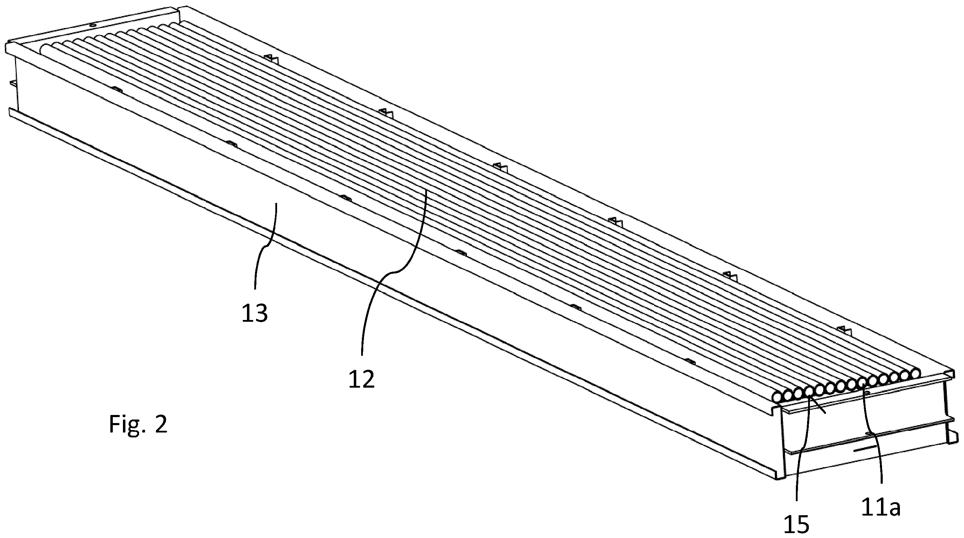

Die Kassette 13 mit den Hohlrohren 11 ist in Fig. 2 vergrößert dargestellt, wobei zum Vordergrund der Fig. 2 weisende Stirnseiten 15 der Rohre 12 bündig zueinander ausgerichtet sind. Die Rohre 12 sind überdies im Wesentlichen parallel zueinander ausgerichtet und weisen als Hohlrohre 12 zumindest abschnittsweise einen inneren Hohlraum 11a auf. Die Kassette 13 mit den Rohren 11 wird mittels auf dem Boden angeordneter Schienen 16 an ihren in Fig. 1 gezeigten Ort bewegt, um die Entnahme der Rohre 12 vorzunehmen.

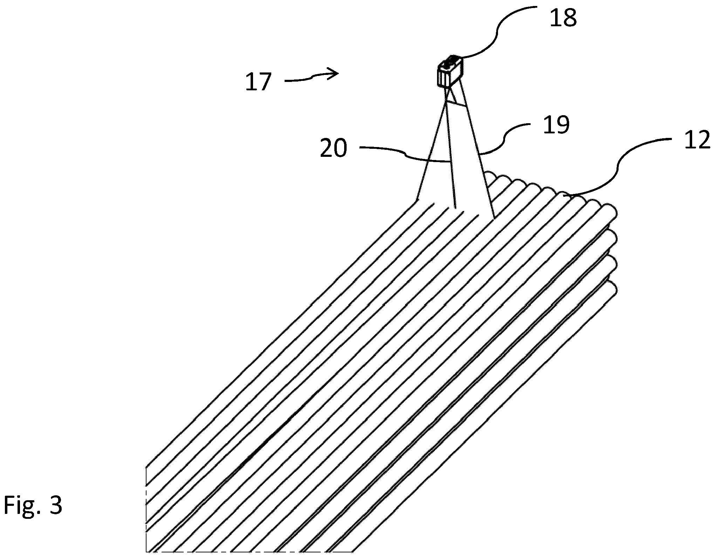

Zunächst wird das zu entnehmende Rohr 11 bestimmt. Hierzu erfasst eine gemäß Fig. 3 oberhalb der Rohre 12 angeordnete erste optische Einrichtung 17, die im gezeigten Ausführungsbeispiel einen Linienprofilsensor 18 aufweist, die Lage der Rohre 12, indem ein Laserstrahl 19 auf die Rohre 12 gerichtet wird. Das beispielshaft an einem der Rohre 12 reflektierte Lasersignal 20 wird von einer in Fig. 3 überdeckten Kamera der ersten optischen Einrichtung 17 aufgenommen und zur Auswertung an eine in Fig. 3 nicht gezeigte Steuereinrichtung der Vorrichtung 10 übermittelt, die anhand des empfangenen Lasersignals 20 die Lagen und Ausrichtungen der Rohre 12 ermittelt, woraufhin die Steuereinrichtung anschließend insbesondere die Lage und die Position des zu entnehmenden Rohres 11 bestimmt.

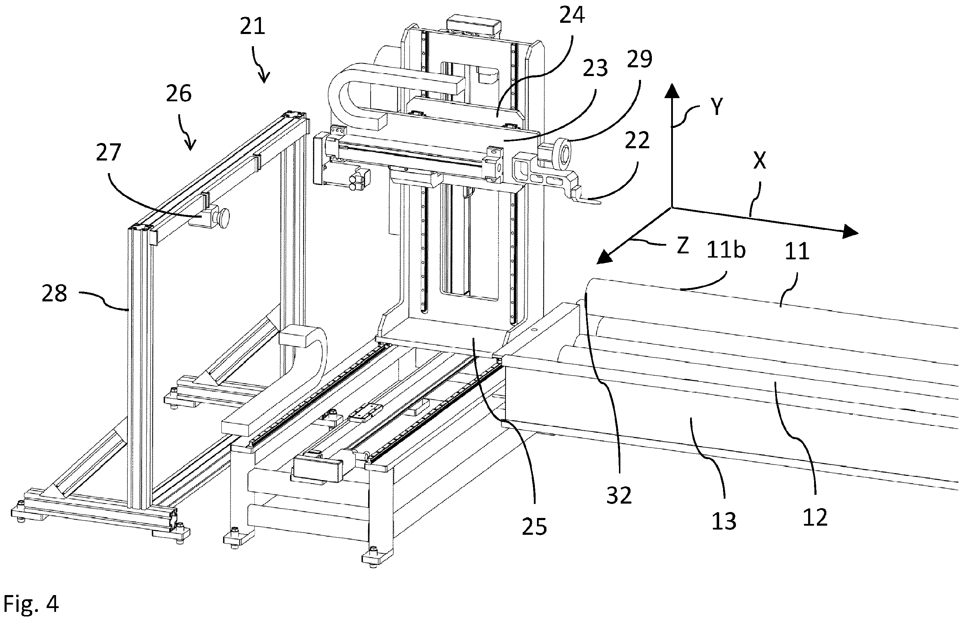

Fig. 4 zeigt ein links der Kassette 13 angeordnetes Hebeteil 21, das einen zu einer Stirnseite 32 des Rohres 11 gerichteten Dorn 22 aufweist. Der Dorn 22 ist mit einem ersten Linearschlitten 23 verbunden, der im Wesentlichen parallel zur Erstreckungsrichtung der Kassette 13 beweglich ist, was in Fig. 4 durch den Pfeil X dargestellt ist. Der erste Linearschlitten 23 ist mit einem zweiten Linearschlitten 24 verbunden, der relativ zu diesem in vertikaler Richtung beweglich ist, was durch den Pfeil Y in Fig. 4 dargestellt ist. Der zweite Linearschlitten 24 ist mit einem dritten Linearschlitten 25 verbunden, der relativ zu diesem in horizontaler Richtung und senkrecht zur Bewegungsrichtung X beweglich ist, was mit dem Pfeil Z dargestellt ist. Die Bewegungsrichtungen X, Y, Z stehen paarweise senkrecht aufeinander. Durch die Linearschlitten 23, 24, 25 ist der Dorn 22 translatorisch entlang der Bewegungsrichtungen X, Y, Z beweglich, um in Eingriff mit der Stirnseite 32 des Rohres 11 gebracht zu werden.

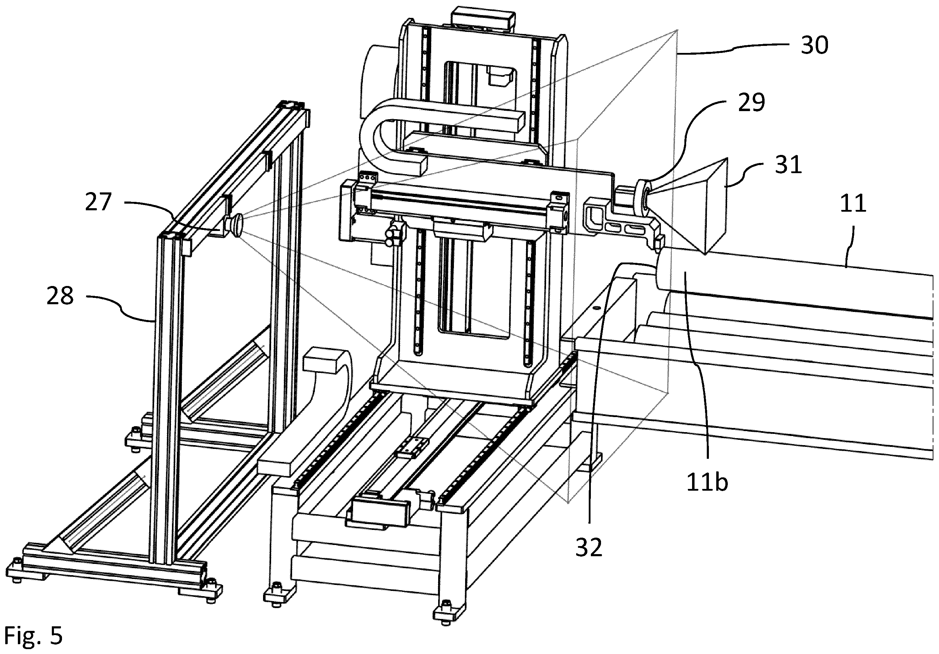

In Fig. 4 ist auf der linken Seite eine zweite optische Einrichtung 26 gezeigt, die eine erste Kamera 27 an einem Rahmen 28 links von den Linearschlitten 23, 24, 25 und eine mit dem ersten Linearschlitten 23 verbundene zweite Kamera 29 aufweist. Die erste Kamera 27 ist mittels des Rahmens 28 manuell beweglich, die zweite Kamera 29 ist stets in fester Relativposition zum Dorn 22 angeordnet und zusammen mit dem ersten Linearschlitten 23 und dem Dorn 22 beweglich. Beide Kameras 27, 29 sind zur Stirnseite 32 des Rohres 11 ausgerichtet, wobei die zweite Kamera 29 näher zum Hebeteil 21, näher zum Dorn 22 und auch näher zur Stirnseite 32 des Rohres 11 angeordnet ist als die erste Kamera 27. Der erste Kamerawinkel 30 der ersten Kamera 27 und der zweite Kamerawinkel 31 der zweiten Kamera 29 sind in Fig. 5 beispielhaft jeweils als Pyramidenstumpf dargestellt. Hieraus ist ersichtlich, dass die zweite Kamera 29 das zu entnehmende Rohr 11 in höherer Auflösung erfasst als die erste Kamera 27. Insofern dient die erste Kamera 27 zur Grobjustage des Dorns 22 und die zweite Kamera 29 zur Feinjustage des Dorns 22. Die Bilddaten der Kameras 27, 29 werden von der Steuereinheit ausgewertet, um die Lage und die Position des zu vereinzelnden Rohres 11, insbesondere von dessen zum Dorn 22 gerichteten Stirnseite 32 zu erfassen, um die Bewegung des Dorns 22 wie folgt vorzunehmen.

In Abhängigkeit von den Daten der ersten optischen Einrichtung 17 und der zweiten optischen Einrichtung 26 wird der Dorn 22 durch die Linearschlitten 23, 24, 25 in einem nächsten Schritt translatorisch zu Ziel-Koordinaten derart bewegt, dass der Dorn 22 in die zum Dorn 22 gerichtete Stirnseite 32 des Rohres 11 eingreift, so dass der Dorn 22 in den in Fig. 4 überdeckten Hohlraum 11a des Rohres 11 bewegt wird. Daraufhin wird der Dorn 22 in vertikaler Richtung Y angehoben, so dass der zur Stirnseite 32 zugeordnete endständige Abschnitt 11b des Rohres 11 zunächst von dem Dorn 22 ergriffen und anschließend angehoben wird, was im Übergang von Fig. 4 zu Fig. 5 dargestellt ist.

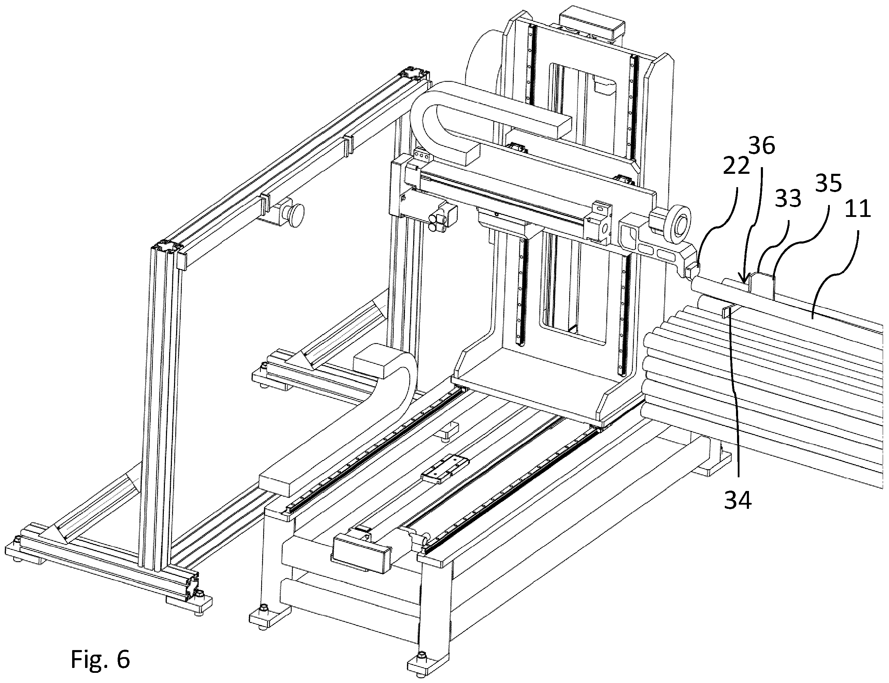

Im Übergang zur Fig. 6 wurde das Rohr 11 weiter angehoben. Der Dorn 22 ergreift noch immer den endständigen Abschnitt 11b des Rohres 11. Ab einer benutzerdefinierten Auslenkung des Dorns 22 in Y-Richtung wird ein Halteteil 33 derart bewegt, dass das Rohr 11 im Bereich des endständigen Abschnitts 11b auf dem Halteteil 33 aufliegt. Das Halteteil 33 ist mit einer in Fig. 6 nicht gezeigten Schiene 42 beweglich verbunden. Zusätzlich weist das Halteteil 33 eine untere, gegenüber der horizontalen Ebene geneigte Auflagefläche 34 auf, die mit einem im Wesentlichen vertikal ausgerichteten Bügelteil 35 einstückig verbunden ist. Durch die geneigte Ausgestaltung der Auflagefläche 34 ist in Verbindung mit dem Bügel 35 ein Anschlag 36 geschaffen, um ein Herunterfallen des angehobenen Rohres 11 zu verhindern.

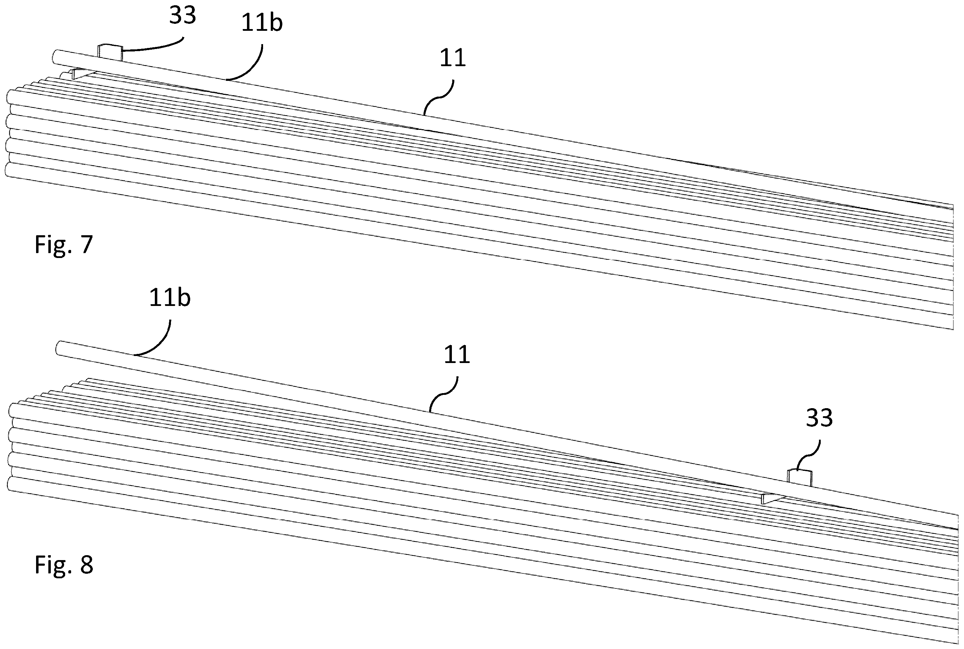

In einem nächsten Schritt wird das Halteteil 33 entlang der Erstreckungsrichtung des Rohres 11 verfahren, was in den Fig. 7 und Fig. 8 gezeigt ist. Dadurch wird das Rohr 11 weiter angehoben und der Rohrgruppe 12 entnommen. Währenddessen ergreift der Dorn 22 als Widerlager des Rohres 11 noch immer dessen endständigen Abschnitt 11b, so dass ein Verrutschen des Rohres 11 vermieden wird.

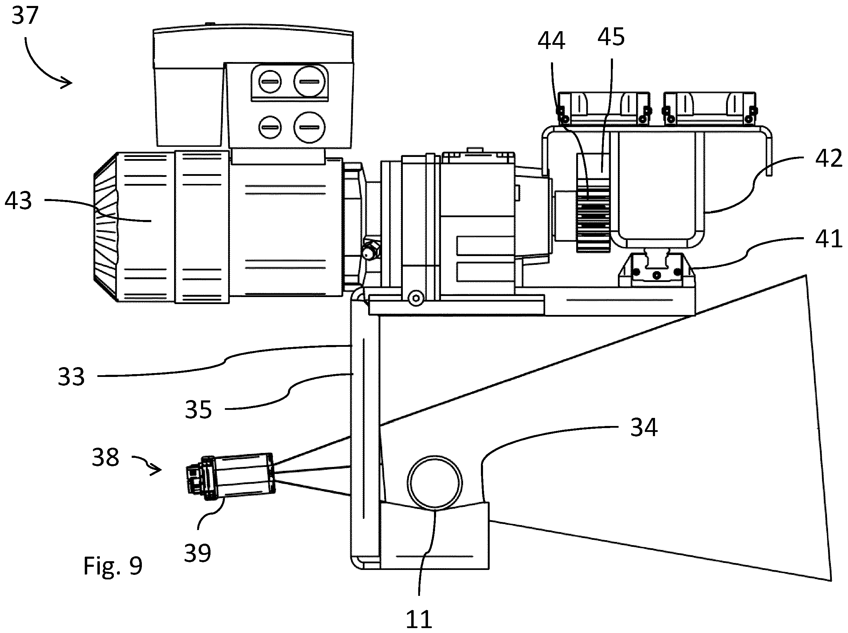

Fig. 9 zeigt das Halteteil 33 als Komponente einer Halteeinrichtung 37 gemäß einer weiteren Ausführungsform in einer Seitenansicht. Im Unterschied zur Ausführungsform des Halteteils 33 der Fig. 6 bis 8 ist die Auflagefläche 34 des in Fig. 9 gezeigten Halteteils 33 v-förmig ausgebildet, so dass ein definierter Auflagepunkt für das Rohr 11 gegeben ist.

Das Halteteil 33 der Fig. 9 weist links neben dem Bügelteil 35 eine dritte optische Einrichtung 37 mit einem zum Rohr 11 gerichteten ersten Linienprofilsensor 39 auf, der mit dem Halteteil 33 verbunden ist, was in Fig. 9 aus Übersichtsgründen nicht dargestellt ist. Die dritte optische Einrichtung 37 ist zum Bügelteil 35 axial versetzt angeordnet. Das Halteteil 33 weist einen zweiten Linienprofilsensor 40 auf, der in Fig. 9 vom ersten Linienprofilsensor 39 perspektivisch überdeckt ist. Die Linienprofilsensoren 39, 40 erfassen die aktuelle Lage und die Position des auf den Halteteil 33 angeordneten Rohres 11 in Bezug zum Halteteil 33, insbesondere auch während der translatorischen Bewegung des Halteteils 33.

Die Halteeinrichtung 37 weist einen Schlitten 41 auf, der mit dem Bügelteil 35 verbunden und unverlierbar entlang der Schiene 42 linear geführt ist. Bei der Betätigung eines Motors 43 der Halteeinrichtung 37 erfolgt die Bewegung der Halteeinrichtung 37 entlang der ersten Schiene 41 mittels eines Zahnrads 44, das in formschlüssigem Eingriff mit einer Zahnstange 45 der ersten Schiene 42 steht.

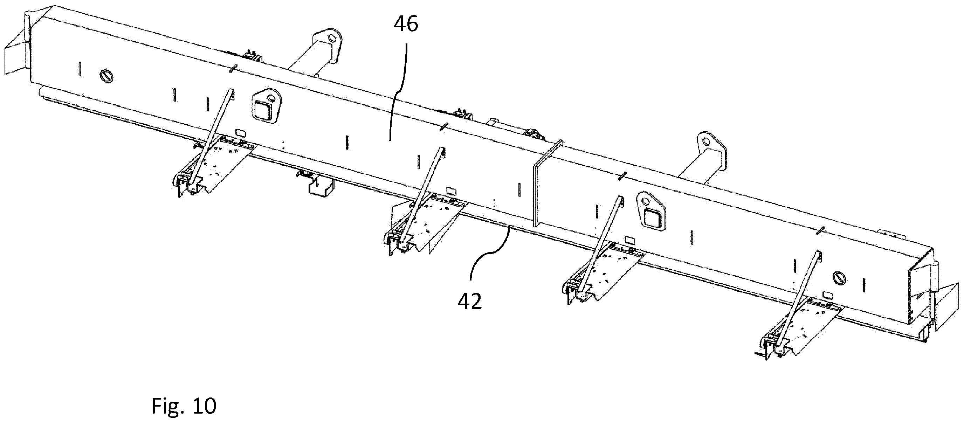

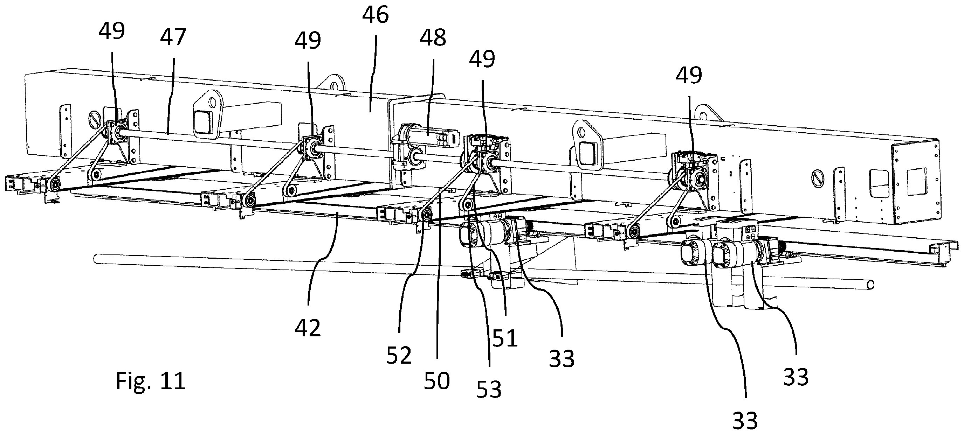

Fig. 10 zeigt die Schiene 42 in einer perspektivischen Ansicht, die mit einem oberhalb der Schiene 42 angeordneten zweiten Träger 46 verbunden ist. Hierzu weist der Träger 46 gemäß Fig. 11 eine parallel zu dessen Erstreckungsrichtung ausgerichtete Welle 47 auf. Die Welle 47 wird von einem Motor 48 angetrieben und durchgreift vier zueinander fluchtend angeordnete Umlenkräder 49, die durch die Welle 47 in Rotation antreibbar sind. Jedes Umlenkrad 49 ist gemäß Fig. 11 mit jeweils einem äußeren ersten Riemen 50 und einem inneren zweiten Riemen 51 versehen, wobei der äußere Riemen 50 um ein äußeres Rad 52 und der innere Riemen 51 um ein inneres Rad 53 geführt sind. Die Räder 52, 53 sind fest mit der Schiene 42 derart verbunden, dass durch Betätigung der Welle 47 die Riemen 50, 51 derart angetrieben werden, dass sich die Schiene 42 translatorisch und relativ zum raumfesten Träger 46 bewegt. Dadurch werden auch die drei in Fig. 11 gezeigten, mit der Schiene 42 verbundenen Halteteile 33, einschließlich des auf diesen aufgelegten Rohres 11, in die gleiche Richtung translatorisch bewegt.

In einer Ausgestaltung sieht das erfindungsgemäße Verfahren vor, mittels der in Fig. 3 gezeigten ersten optischen Einrichtung 17 die Lage und Positionen der Rohre 12 in der Kassette 13 zu erfassen. Anschließend wird mittels der in Fig. 4 gezeigten zweiten optischen Einrichtung 26 die Lage und die Position der Stirnseite 32 des zu entnehmenden Rohres 11 bestimmt. Mit Hilfe dieser Informationen wird der Dorn 22 durch Betätigung der Linearschlitten 23, 24, 25 derart bewegt, dass der Dorn 22 in die Stirnseite 32 des Rohres 11 eingreift. Das Rohr 11 wird, zusammen mit dem Dorn 22, angehoben, s. Fig. 5. Sobald das Rohr 11 um eine bestimmte Höhe angehoben ist, wird das Halteteil 33 derart bewegt, dass das Rohr 11 auf der Auflagefläche 34 des Halteteils 33 angeordnet wird, s. Fig. 6. Anschließend wird das Halteteil 33 linear entlang der Erstreckungsrichtung des Rohres 11 verfahren, wodurch das Rohr 11 weiter angehoben und der Gruppe 12 von Rohren entnommen wird. Bei der Bewegung des Halteteils 33 erfasst die dritte optische Einrichtung 38 die Lage und die Ausrichtung des Rohres 11 in Bezug auf die Bewegungsrichtung des Halteteils 33. Falls die Ausrichtung des Rohres 11 von der Bewegungsrichtung des Halteteils 33 um einen benutzerdefinierten Soll-Wert abweicht, wird die Schiene 42, während der Bewegung des Halteteils 33, durch den an dem Träger 46 angeordneten Motor 48 translatorisch senkrecht zur Bewegungsrichtung des Halteteils 33 bewegt. Bedarfsweise werden weitere Halteteile 33 unterhalb des Rohres 11 bewegt, um das Rohr 11 bei dessen Entnahme zu sichern. Nachdem das entnommene Rohr 11 einer Zielposition, in diesem Fall der Werkzeugmaschine 14 zugeführt wurde, wird ein weiteres Rohr 11 der Rohrgruppe 12 entnommen.

Die nicht gezeigte Steuereinheit der Vorrichtung weist ein Computerprogramm mit Programmcodemitteln auf, das die Schritte des vorstehend beschriebenen Verfahrens durchführt, wenn das Computerprogramm auf der Steuereinheit ausgeführt wird.

## Patentansprüche

1. Verfahren zur Entnahme eines einzelnen Rohres (11) aus einer Gruppe (12) von mehreren Rohren mit den folgenden Verfahrensschritten:
- Ergreifen eines endständigen Abschnitts (11b) des Rohres (11) mittels eines Hebeteils (21),
- Anheben des endständigen Abschnitts (11b) des Rohres (11) durch Anheben des Hebeteils (21),
- Anordnen des endständigen Abschnitts (11b) des Rohres (11) auf mindestens einem Halteteil (33) und
- Bewegen des mindestens einen Halteteils (33) mit einer Bewegungsrichtungskomponente parallel zur Erstreckungsrichtung des Rohres (11), bis das Rohr (11) der Gruppe (12) von Rohren entnommen ist.

2. Verfahren nach Anspruch 1, **dadurch gekennzeichnet, dass** das Hebeteil (21) in Eingriff mit der Stirnseite (32) des Rohres (11) gebracht wird, wobei insbesondere das Hebeteil (21) in einen Hohlraum (11a) des Rohres (11) bewegt wird.

3. Verfahren nach einem der Ansprüche 1 oder 2, **dadurch gekennzeichnet, dass** das Rohr (11) auf mindestens zwei Halteteilen (33) angeordnet wird, wobei die mindestens zwei Halteteile (33) unabhängig voneinander bewegt werden.

4. Verfahren nach einem der Ansprüche 1 bis 3, **dadurch gekennzeichnet, dass** das Hebeteil (21) bei der Bewegung des mindestens einen Halteteils (33) den endständigen Abschnitt (11b) des Rohres (11) ergreift.

5. Verfahren nach einem der Ansprüche 1 bis 4, **dadurch gekennzeichnet, dass** mittels mindestens einer optischen Einrichtung (17, 26) ermittelt wird, welches Rohr (11) der Gruppe (12) entnommen wird.

6. Verfahren nach einem der Ansprüche 1 bis 5, **dadurch gekennzeichnet, dass** das entnommene Rohr (11) durch eine Bewegung des mindestens einen Halteteils (33) einer Zielposition zugeführt wird und danach das nächste Rohr (11) der Gruppe (12) von Rohren entnommen wird.

7. Vorrichtung (10) zur Entnahme eines einzelnen Rohres (11) aus einer Gruppe (12) von mehreren Rohren, umfassend:
- mindestens ein bewegliches Hebeteil (21), das zum Ergreifen eines endständigen Abschnitts (11b) des Rohres (11) und zum Anheben des endständigen Abschnitts (11b) des Rohres (11) ausgebildet ist, und
- mindestens ein bewegliches Halteteil (33), das zum Anordnen unterhalb des endständigen Abschnitts (11b) des Rohres (11) und zur Bewegung mit einer Bewegungsrichtungskomponente parallel zur Erstreckungsrichtung des Rohres (11) ausgebildet ist.

8. Vorrichtung nach Anspruch 7, wobei die Vorrichtung zur Durchführung eines Verfahrens gemäß einem der Ansprüche 1 bis 6 ausgestaltet ist.

9. Vorrichtung nach einem der Ansprüche 7 oder 8, **dadurch gekennzeichnet, dass** das Hebeteil (21)
- einen Dorn (22) aufweist, der mit der Stirnseite (32) des Rohres (11) in Eingriff bringbar ist, und/oder
- ein Klemmteil aufweist, an welchem der endständige Abschnitt (11b) des Rohres (11) klemmbar ist.

10. Vorrichtung nach einem der Ansprüche 7 bis 9, **dadurch gekennzeichnet, dass** das Hebeteil (21) an wenigstens einer Linearführung (23, 24, 25) geführt ist.

11. Vorrichtung nach einem der Ansprüche 7 bis 10, **dadurch gekennzeichnet, dass**
- eine erste optische Einrichtung (17) dazu ausgebildet ist, die Erstreckungsrichtung des zu vereinzelnden Rohres (11) in der Gruppe (12) von Rohren zu erfassen, und/oder
- eine zweite optische Einrichtung (26) dazu ausgebildet ist, die Position der Stirnseite (32) des zu entnehmenden Rohres (11) in der Gruppe (12) von Rohren zu erfassen, wobei die zweite optische Einrichtung (26) insbesondere eine erste Kamera (27) und eine zweite Kamera (29) aufweist, wobei die zweite Kamera (29) näher am Hebeteil (21) angeordnet ist als die erste Kamera (27).

12. Vorrichtung nach einem der Ansprüche 7 bis 11, **dadurch gekennzeichnet, dass** die erste optische Einrichtung (17) und/oder die zweite optische Einrichtung (26) dazu ausgebildet sind, die Ziel-Koordinaten für die Bewegung des Hebeteils (21) zu ermitteln.

13. Vorrichtung nach einem der Ansprüche 7 bis 12, **dadurch gekennzeichnet, dass** das mindestens eine Halteteil (33)
- mindestens einen Anschlag (36) für das Rohr (11) aufweist und/oder
- an einer Schiene (42) angeordnet und entlang der Schiene (42) beweglich ist, wobei die Schiene (42) insbesondere mit einem Träger (46) verbunden und relativ zu dem Träger (46) beweglich ist.

14. Vorrichtung nach einem der Ansprüche 7 bis 13, **dadurch gekennzeichnet, dass** das mindestens eine Halteteil (33) eine dritte optische Einrichtung (38) aufweist, die zur Erfassung der Lage des auf dem Halteteil (33) angeordneten Rohres (11) in Bezug auf das Halteteil (33) ausgebildet ist, wobei die dritte optische Einrichtung (38) mit einer Steuereinheit in Verbindung steht, welche zur Bewegung der Schiene (42) in Bezug auf den Träger (46) ausgebildet ist, sobald die erfasste Lage des Rohres (11) in Bezug auf das Halteteil (33) um einen benutzerdefinierten Toleranzwert von einer benutzerdefinierten Soll-Lage abweicht.

15. Vorrichtung nach einem der Ansprüche 7 bis 14, **dadurch gekennzeichnet, dass** dem mindestens einen Halteteil (33) ein Anschlag (21) zugeordnet ist, der als Widerlager eines auf dem Halteteil (33) angeordneten Rohres (11) dient.

16. Computerprogramm mit Programmcodemitteln, das dazu ausgestaltet ist, die Schritte eines Verfahrens nach einem der Ansprüche 1 bis 6 durchzuführen, wenn das Computerprogramm auf einem Computer oder einer entsprechenden Recheneinheit ausgeführt wird, insbesondere auf einer Steuereinheit einer Vorrichtung (10) nach einem der Ansprüche 7 bis 15.
